# EUROPÄISCHE PATENTSCHRIFT

(11) **EP 2 961 556 B1**
(45) Veröffentlichungstag und Bekanntmachung des Hinweises auf die Patenterteilung: **04.01.2017**
(21) Anmeldenummer: 14719217.3
(22) Anmeldetag: 27.02.2014
(51) Int. Cl.: B23K 11/00

(54) **VERFAHREN ZUR REPARATUR EINES SCHADENS AN EINEM METALLISCHEN SUBSTRAT**
REPAIRING METHOD OF A DAMAGE ONTO A METALLIC SUBSTRATE
PROCÉDÉ DE RÉPARATION D'UN DOMMAGE SUR UN SUBSTRAT MÉTALLIQUE

(30) Priorität: 27.02.2013 AT 501252013
(43) Veröffentlichungstag der Anmeldung: 06.01.2016
(73) Patentinhaber: Berndorf Band GmbH, 2560 Berndorf (AT)
(72) Erfinder: WAHL, Christian, A-2560 Berndorf (AT)
(74) Vertreter: Burger, Hannes
(86) Internationale Anmeldenummer: PCT/AT2014/050043
(87) Internationale Veröffentlichungsnummer: WO 2014/131070

(56) Entgegenhaltungen:
- WO-A1-2009/140710
- DE-C- 467 294
- DE-C1- 3 806 309
- US-A- 6 041 573

## Beschreibung

Die Erfindung betrifft ein Verfahren zur Reparatur eines Schadens an einem metallischen Substrat, wie es in dem Oberbegriff des Anspruchs 1 offenbart ist.

Ein Verfahren der genannten Art ist grundsätzlich bekannt. Beispielsweise offenbart die WO 2009/140710 A1 dazu ein Verfahren, bei dem ein Schaden an einem metallischen Substrat, insbesondere einem endlosen Blechband, dadurch behoben wird, dass im Bereich des Schadens eine Ausfräsung angefertigt wird und in diese ein metallisches Füllstück eingeschweißt wird. Das Füllstück weist dabei einen maximalen Durchmesser auf, welcher größer ist als jener der Ausfräsung.

Nachteilig ist dabei, dass beim Auflegen des Füllstücks auf das Substrat unter dem Füllstück, beziehungsweise zwischen Füllstück und Substrat, ein Hohlraum entsteht, der beim Verschweißen nicht notwendigerweise aufgefüllt wird. Untersuchungen haben ergeben, dass sich beim Verschweißen Lunker, Gasblasen und/oder Poren bilden können, welche den Reparaturversuch unter Umständen zunichtemachen beziehungsweise ein erneutes Ausfräsen und Einschweißen erforderlich machen. DE 467 294 C beschreibt den Oberbegriff des Anspruchs 1.

Eine Aufgabe ist es daher, ein verbessertes Verfahren zur Reparatur eines Schadens an einem metallischen Substrat anzugeben. Insbesondere soll die Bildung von Lunkern, Gasblasen und/oder Poren reduziert oder wenn möglich ganz vermieden werden.

Die Aufgabe der Erfindung wird mit einem Verfahren der eingangs genannten Art gelöst, bei dem das Füllstück nach dem Einlegen in die Vertiefung deren Boden berührt, zum Rand der Vertiefung jedoch wenigstens bereichsweise ein Abstand vorgesehen wird. Ein solches Verfahren ist im Anspruch 1 beansprucht.

Mit anderen Worten ist eine gedachte Schnittfläche des eingelegten und den Boden der Vertiefung berührenden Füllstücks in der Ebene der Substratoberfläche kleiner als ein Rand der Vertiefung in dieser Ebene.

Insbesondere kann auch der Radius des gekrümmten Abschnitts im Bereich der Vertiefung kleiner sein als ein Radius eines Randes der Vertiefung, und zwar im Vertikalschnitt (normal zur Oberfläche des Substrats) und/oder im Horizontalschnitt (in der Ebene des Substrats).

Vorteilhaft kann eine Bildung von Lunkern, Gasblasen und/oder Poren so vermieden oder zumindest verringert werden, denn die Vertiefung wird praktisch vom Boden ausgehend ausgefüllt. Weiterhin wird die Entgasung der Fehlstelle beim Schweißen verbessert. Aufwändige Nacharbeit in Form einer erneuten Ausfräsung, so wie sie bei bekannten Reparaturverfahren aufgrund von Bildung von Lunkern, Gasblasen und/oder Poren notwendig sein kann, ist bei dem vorgeschlagenen Verfahren nicht oder kaum mehr nötig. Durch die verbesserte Füllung kann auch ein kleineres Füllstück verwendet werden. Es ist also auch weniger Materialeinsatz vonnöten.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Vertiefung mit einem spanabhebenden rotierenden Werkzeug, beispielsweise einem Fräser, angefertigt wird. Dadurch kann eine besonders genaue Fertigung der Vertiefung erfolgen, wie sie für kleine Dimensionen, beispielsweise 30 µm bis 200 µm Tiefe, von besonderer Bedeutung ist. Alternativ oder zusätzlich kann die Vertiefung auch mit einem Schleifstift hergestellt werden. Der Rand der Vertiefung ist bei dieser Ausführungsform - ein ebenes Substrat vorausgesetzt - kreisförmig. Generell können für das Fräsen der Vertiefung beispielsweise Kugelfräser, Stirnfräser sowie Fräser mit elliptoidischem beziehungsweise tropfenförmigem Kopf verwendet werden.

Günstig ist es auch, wenn die Vertiefung mit Hilfe eines Lasers und/oder mit Hilfe der Funkenerosion hergestellt wird. Vorteilhaft kann dadurch die Entstehung von Spänen beziehungsweise Schleifstaub vermieden werden, welche oder welcher in bestimmten Umgebungen nachteilig sein kann.

Weiterhin kann die Vertiefung auch durch Umformen, beispielsweise durch Einschlagen/Eindrücken einer Punze oder eines Stempels, insbesondere eines Körners, hergestellt werden. Dabei entstehen weder Späne, noch Staub, noch eine sonstige Emission von Gasen. Die Punze oder der Stempel kann dabei eine beliebige Form haben und insbesondere auch einen halbkugelförmigen Kopf aufweisen.

Günstig ist es, wenn ein rotationssymmetrisches Füllstück in die Vertiefung eingelegt wird, beispielsweise ein Rotationsellipsoid oder auch eine Kugel. Diese Formen sind relativ einfach herzustellen und eignen sich wegen ihrer konvexen Oberfläche besonders gut für das vorgeschlagenen Reparaturverfahren.

Günstig ist es weiterhin, wenn die Vertiefung kugelsegmentförmig ausgeführt wird, insbesondere unter Zuhilfenahme eines Kugelfräsers oder einer Punze/eines Stempels mit halbkugelförmigem Kopf. Dadurch wird ein rotationssymmetrisches Füllstück sehr gut in der Vertiefung zentriert, wodurch sich eine besonders gleichmäßige Auffüllung derselben beim Schweißen ergibt.

Besonders vorteilhaft ist es, wenn
- die Vertiefung kugelsegmentförmig ausgeführt wird und
- ein kugelförmiges Füllstück mit einem Kugelradius kleiner als der Kugelradius der Vertiefung eingelegt wird.

Kugelfräser und kugelförmige Füllstücke sind relativ leicht erhältlich, wodurch das Reparaturverfahren ohne große Investitionen ausgeführt werden kann. Darüber hinaus ergibt sich auch dadurch ein Vorteil, dass das kugelförmige Füllstück in der kugelsegmentförmigen Vertiefung bei beliebiger Orientierung "automatisch" zentriert wird, wodurch sich wiederum eine besonders gleichmäßige Auffüllung derselben beim Schweißen ergibt. In einer vorteilhaften Variante beträgt der Kugeldurchmesser des Füllstücks = 500 µm, der Fräserdurchmesser = 600 µm. Insbesondere beträgt das ausgefräste Volumen in einer vorteilhaften Variante 40-70% des Kugelvolumens des Füllstücks.

Günstig ist es, wenn ein Füllstück in die Vertiefung eingelegt wird, das eine zum Substrat artgleiche oder idente Zusammensetzung aufweist. Auf diese Weise ergibt sich nach der Reparatur ein homogenes Substrat - die Reparaturstelle ist dabei nicht oder nur kaum sichtbar.

Günstig ist es aber auch, wenn ein Füllstück in die Vertiefung eingelegt wird, das höher legiert ist als das Substrat. Dadurch können Heißrisse beim Schweißen vermieden werden.

Vorteilhaft ist es, wenn für das Verschweißen eine Permanentelektrode auf das Füllstück aufgesetzt und diese hierauf mit einem Strom beaufschlagt wird. Auf diese Weise kann eine Bildung von Lunkern, Gasblasen und/oder Poren vermieden oder zumindest weitgehend verringert werden. Wird der Schmelzvorgang beispielsweise ausgehend von der Stelle eingeleitet, wo das Füllstück den Boden der Vertiefung berührt, wird die Vertiefung vom Boden ausgehend aufgefüllt und Luft aus derselben gedrängt, beziehungsweise wird auch die Entgasung der Reparaturstelle beim Schweißen verbessert. Dies ist aber auch dann der Fall, wenn der Schmelzvorgang am Berührpunkt des Füllstücks mit der Elektrode beginnt, da dann das abschmelzende Material in den Spalt zwischen dem Rand der Vertiefung und dem Füllstück hinein fließen und so die Vertiefung sukzessive auffüllen kann. Für die Einleitung des Schmelzvorgangs sind selbstverständlich auch weitere Abwandlungen vorstellbar. Im Endergebnis kann auf einfache und schnelle Art und Weise eine vollflächige Verbindung des Füllstückes mit der Oberfläche der Ausnehmung erfolgen. Durch Verwendung einer Permanentelektrode kann die Verschweißung ohne über das Füllstück hinausgehende Schweißzusatzwerkstoffe und somit auf einfache Weise erfolgen.

Günstig ist es weiterhin, wenn ein nach dem Verschweißen über die Oberfläche des Substrats hinausragendes Material abgetragen wird. Dadurch kann die Oberfläche des Substrats wiederhergestellt werden, auch wenn der Schweißvorgang noch zu keiner zufriedenstellenden Oberfläche führt.

Günstig ist auch eine Variante, bei welcher der Materialabtrag mit Hilfe eines Stirnfräsers ausgeführt wird. Dadurch kann relativ viel Material bei dennoch hoher Endgenauigkeit, insbesondere Ebenheit, abgetragen werden. Alternativ oder zusätzlich kann der Materialabtrag auch durch Abschleifen erfolgen.

Besonders vorteilhaft ist es, wenn eine mobile Vorrichtung auf das Substrat aufgesetzt und mit wenigstens einem Magneten und/oder wenigstens einem Saugnapf auf dem Substrat befestigt wird, und in Folge mit Hilfe dieser Vorrichtung die Vertiefung und/oder die Verschweißung und/oder der Materialabtrag hergestellt beziehungsweise durchgeführt wird ohne die Vorrichtung vom Substrat zu lösen. Dadurch kann die Reparatur auf effiziente Weise erfolgen. Werden mehrere Arbeitsschritte ausgeführt, ohne die Vorrichtung vom Substrat zu lösen, so brauchen auch die verschiedenen Werkzeuge nicht jedes Mal von neuem zur Reparaturstelle ausgerichtet werden. Durch Verwendung einer mobilen, das heißt über dem Substrat ortsbeweglichen, Vorrichtung, können mehrere Schäden hintereinander besonders effizient repariert werden. Zudem wird die Präzision beim Reparieren der Fehlstelle gesteigert. Durch die Verwendung eines Elektromagnets und/oder eines Saugnapfes kann die vorgeschlagene Vorrichtung sehr genau auf dem Substrat positioniert aber auch sicher gehalten werden. Insbesondere bei nichtmagnetischen Substraten bietet sich die Verwendung von Saugnäpfen an, jedoch kann die Vorrichtung auch bei nichtmagnetischen oder schwach magnetischen Substraten über Elektromagnete gehalten werden, wenn auf der der Vorrichtung gegenüberliegenden Seite des metallischen Substrates ein Anker, beispielsweise ein Weicheisenanker, angeordnet wird, der von den Elektromagneten angezogen wird, wodurch gleichzeitig die Vorrichtung gegen das Substrat gepresst wird.

Generell kann der Antrieb des Fräsers oder der Fräser elektrisch, pneumatisch oder auch hydraulisch erfolgen. Dasselbe gilt für eventuell vorhandene Vorschubmotoren für den oder die Fräser beziehungsweise für die Permanentelektrode. Insbesondere können diese auch als Linearmotoren ausgeführt sein. Im speziellen bei einem manuell verfahrbarem Fräser und/oder einer manuell verfahrbarer Permanentelektrode können vorteilhaft auch (verstellbare) Tiefenanschläge vorgesehen werden.

Durch die anschließende, insbesondere spanabhebende, Bearbeitung kann eine Egalisierung bezogen auf die Oberfläche des metallischen Substrates erreicht werden. Beispielsweise kann dazu ein Stirnfräser eingesetzt werden, insbesondere mit einem Durchmesser, welcher größer ist als ein der Reparaturstelle umschriebener Kreis. Auf diese Weise kann die Egalisierung besonders rationell erfolgen. Der genannte Arbeitsvorgang kann daher mit nur einer Stellung des Fräsers und lediglich durch Absenken desselben in Richtung zur Oberfläche des Substrats erfolgen. Dieses Absenken kann dabei über einen entsprechenden Anschlag exakt in der Ebene oder auch etwas oberhalb der genannten Oberfläche beendet werden. Um die Oberflächengüte an die Oberflächengüte des anschließenden metallischen Substrates anzugleichen, wird diese abschließend gegebenenfalls poliert. Alternativ oder zusätzlich zum Egalisieren mit einem Stirnfräser kann dieses auch durch Abschleifen erfolgen.

Günstig ist es schließlich, wenn die Vertiefung mit einer Tiefe angefertigt wird, die 5 % bis 40 %, insbesondere 15 % bis 30 %, eines Durchmessers entspricht, welcher dem Füllstück umschrieben wird. Dadurch ergibt sich eine besonders gute Möglichkeit zur Reparatur der Fehlstelle. Durch die vorgeschlagene Maßnahme wird darüber hinaus ein Austreten von Gasen, insbesondere Luft, zwischen dem Füllstück und der Wandung der Ausnehmung begünstigt.

Zum besseren Verständnis der Erfindung wird diese anhand der nachfolgenden Figuren näher erläutert. Es zeigen:
- Fig. 1: eine Schrägansicht eines metallischen Substrats mit einer Vertiefung und einem darin eingelegten Füllstück und
- Fig. 2: eine beispielhafte Vorrichtung zur Reparatur eines Schadens an einem metallischen Substrat.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

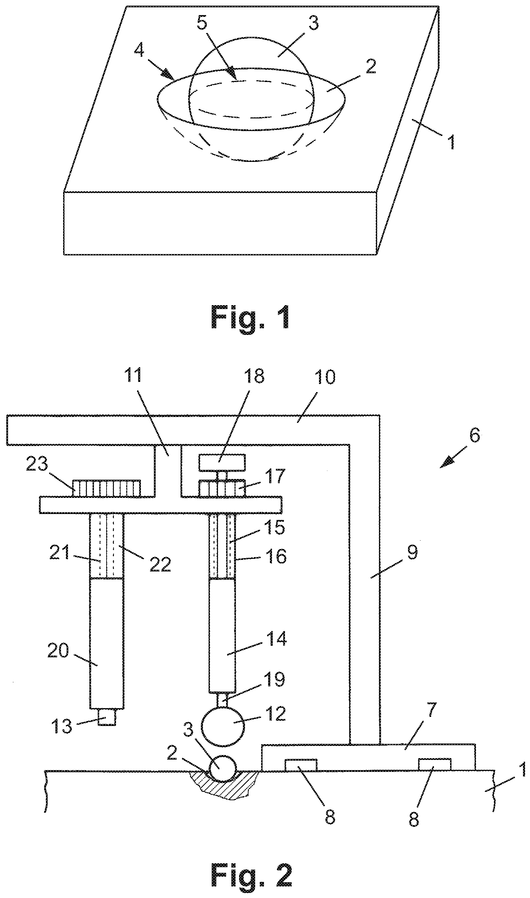

Fig. 1 zeigt eine Schrägansicht eines metallischen Substrats 1 mit einer Vertiefung 2 und einem darin eingelegten Füllstück 3. Die Vertiefung 2 wird dabei im Bereich eines Schadens an dem metallischen Substrat 1 angefertigt. Danach wird das metallische Füllstück 3, das wenigstens einen konvexen, gekrümmten Abschnitt aufweist, in die genannte Vertiefung 2 eingelegt, wobei der genannte wenigstens eine gekrümmte Abschnitt der Vertiefung 2 zugewandt wird. Das Füllstück 3 berührt nach dem Einlegen in die Vertiefung 2 deren Boden, zum Rand 4 der Vertiefung 2 wird jedoch wenigstens bereichsweise ein Abstand vorgesehen. Mit anderen Worten ist eine gedachte Schnittfläche 5 des eingelegten und den Boden der Vertiefung 2 berührenden Füllstücks 3 in der Ebene der Oberfläche des Substrats 1 kleiner als ein Rand 4 der Vertiefung 2 in dieser Ebene.

In dem in Fig. 1 konkret dargestellten Beispiel ist die Vertiefung 2 kugelsegmentförmig ausgeführt, beispielsweise mit einem spanabhebenden rotierenden Werkzeug, insbesondere einem Kugelfräser. In dem in Fig. 1 dargestellten Beispiel ist darüber hinaus ein rotationssymmetrisches Füllstück 3, konkret ein kugelförmiges Füllstück 3, in die Vertiefung 2 eingelegt. Im Speziellen ist weist das kugelförmiges Füllstück 3 einen Kugelradius auf, der kleiner ist als der Kugelradius der Vertiefung 2. In einer vorteilhaften Variante beträgt der Kugeldurchmesser des Füllstücks 3 = 500 µm, der Durchmesser des Fräsers = 600 µm. Insbesondere beträgt das ausgefräste Volumen in einer vorteilhaften Variante 40-70% des Kugelvolumens des Füllstücks. Vorteilhaft wird die Vertiefung 2 mit einer Tiefe angefertigt, die 5 % bis 40 % eines Durchmessers entspricht, welcher dem Füllstück 3 umschrieben wird (entspricht in diesem Beispiel dessen Kugeldurchmesser). Bei einem Kugeldurchmesser des Füllstücks 3 von 500 µm ergibt somit eine bevorzugte Tiefe von 25 µm bis 200 µm.

Das Füllstück 3 kann eine zum Substrat 1 artgleiche oder idente Zusammensetzung aufweisen. Das Füllstück 3 kann aber auch höher legiert sein als das Substrat 1. Das Substrat 1 kann zum Beispiel als endloses Stahlband aus einem Chromnickelstahl mit 15 Gew.-% Chrom, 7 Gew.-% Nickel, 0,7 Gew.-% Kupfer und 0,4 Gew.-% Titan ausgebildet sein. Die Dicke des Substrats 1 kann beispielsweise 2,00 mm betragen.

Nach dem Einlegen des Füllstücks 3 wird dieses mit dem Substrat 1 verschweißt. Beispielsweise kann dazu eine Permanentelektrode auf das Füllstück 3 aufgesetzt und dieses hierauf mit einem Strom beaufschlagt werden. Ein nach dem Verschweißen über die Oberfläche des Substrats 1 hinausragendes Material kann abschließend abgetragen werden, beispielsweise unter Zuhilfenahme eines Stirnfräsers und/oder durch Abschleifen.

In einer besonders vorteilhaften Variante des vorgestellten Verfahrens wird eine mobile Vorrichtung 6 auf das Substrat 1 aufgesetzt und mit wenigstens einem Magneten 8 und/oder wenigstens einem Saugnapf auf dem Substrat 1 befestigt. In Folge wird mit Hilfe dieser Vorrichtung 6 die Vertiefung 2 und/oder die Verschweißung und/oder der Materialabtrag hergestellt beziehungsweise durchgeführt, ohne die Vorrichtung 6 vom Substrat 1 zu lösen.

Die Fig. 2 zeigt dazu ein Beispiel einer solchen Reparaturvorrichtung 6. In Fig. 2 ruht die Reparaturvorrichtung 6 mit einer Platte 7 auf dem metallischen Substrat 1. Die Platte 7 weist Elektromagneten 8 auf, mit denen die Vorrichtung 6 auf dem Substrat 1 befestigt werden kann. Wenn erforderlich, können die Magneten 8 mit einem nicht dargestellten Weicheisenanker zusammenwirken, welcher den Elektromagneten 8 gegenüberliegend (also auf der Unterseite des Substrats 1) angeordnet wird. Dies ist beispielsweise bei nichtmetallischen Substraten 1 von Vorteil. Alternativ oder zusätzlich können beispielsweise auch Saugnäpfe zur Befestigung der Reparaturvorrichtung 6 eingesetzt werden.

Die Platte 7 trägt einen Galgen 9 mit einem auskragenden Arm 10, in dem ein Schwenkstück 11 gelagert ist. Dieses Schwenkstück 11 weist Rasten auf, so dass abwechselnd zumindest ein Fräser 12 oder eine Permanentelektrode 13 in dieselbe Position oberhalb der Vertiefung 2 geschwenkt werden kann. Der Kugelfräser 12 ist in einer Halterung 14 befestigt, die ein Gewindestück 15 aufweist, das in ein Gewindestück 16 eingeschraubt ist. Dieses Gewindestück 16 kann über eine Rändelmutter 17 abgesenkt und angehoben werden, wobei die Rändelmutter 17 selbst eine fixierbare Mikroverstellung für das Absenken und Anheben des Fräsers 12 und über einen Schrittmotor bei drehendem Fräser 12 (nicht dargestellt) erlaubt. Durch die Gewindestücke 15 und 16 wird darüber hinaus ein Anschlag gebildet. Durch das Gewindestück 15 ist schließlich eine Welle 19 geführt, die mit der Halterung 14 und dem Motor 18 verbunden ist. Die zylinderförmige Welle 19 weist am oberen Ende einen Sechskant auf, der mit einer entsprechenden Ausnehmung in einem Motor 18 zusammenwirkt, so dass der Antrieb des Fräsers 12 in den unterschiedlichen Höhenstellungen gewährleistet ist.

Die Permanentelektrode 13, welche hier als Anode geschaltet ist, weist eine Halterung 20 auf, mit an ihrem oberen Ende ein Gewindestück 21, das mit einem weiteren Gewindestück 22 zusammenwirkt, so dass über die Rändelmutter 23, die Halterung 20 und damit die Elektrode 13 auf den Scheitel des Füllstückes 3 abgesenkt und gehoben werden kann. Die Rändelmutter 23 kann über einen Schrittmotor (nicht dargestellt) betätigt werden.

Die Reparaturvorrichtung 6 kann auch einen weiteren Stirnfräser mit planer Arbeitsfläche mit einem Durchmesser von beispielsweise 2 mm (und damit mehr als 600 µm) zum Abtragen des über das Substrat 1 ragenden Teils des Füllstückes 3 aufweisen. Zusätzlich oder alternativ kann die Reparaturvorrichtung 6 auch eine Schleifeinrichtung (z.B. Schleifstift, Schleifteller, Schleifband) für den angegebenen Zweck aufweisen.

In einem Beispiel wird das Substrat 1 mit einem zweidimensionalen Handmikroskop nach oberflächlichen Lunkern und visuell nach Poren, Gasblasen oder dergleichen untersucht. Wird eine fehlerhafte Stelle festgestellt, so wird die Reparaturvorrichtung 6 mit dem Fräser 12 und der Permanentelektrode 13 über den zu reparierenden Bereich positioniert und mit den Elektromagneten 8 in dieser Stellung fixiert. Sodann wird der Fräser 12 über den (beispielsweise elektrisch oder mit Druckluft betriebenen) Motor 18 in Rotation versetzt, und mit dem Schrittmotor zum Substrat 1 hin bewegt bis die Halterung 14 am Anschlag, welcher durch die Gewindestücke 15, 16 und die Rändelmutter 17 gebildet wird, anschlägt, und eine beispielhafte Tiefe von 120 µm erreicht ist. Der Fräser 12 ist hier kugelförmig mit einem Durchmesser von 600 µm.

Nachdem die Vertiefung 2 gefertigt ist, wird das kugelförmige Füllstück 3 mit einem Durchmesser von zum Beispiel 500 µm in die Vertiefung 2 eingelegt. Der Fräser 12 wird vor oder nach dem Einlegen des Füllstücks 3 in die Vertiefung 2 angehoben und in eine Ruhestellung verdreht.

Sodann wird die Permanentelektrode 13 über das kugelförmige Füllstück 3 geschwenkt und auf den Scheitel des Füllstückes 3 abgesenkt. Es erfolgt ein Stromstoß mit beispielsweise 8,0 Volt, 10,0 Ampere für 0,3 Sekunden. Die Permanentelektrode 13 ist dabei vorzugsweise als Anode und das metallische Substrat 1 als Kathode geschalten.

Nach dem Verschweißen des kugelförmigen Füllstückes 3 in der Vertiefung 2 wird die Permanentelektrode 13 hochgefahren und ein Stirnfräser über den Bereich geschwenkt, welcher eine plane Arbeitsfläche aufweist. Mit diesem Fräser wird der überstehende Teil des Füllstückes 3 bis zur Ebene des Substrats 1 oder etwas darüber abgefräst. Alternativ oder zusätzlich kann der genannte Teil auch abgeschliffen werden. Abschließend wird der Reparaturbereich( z. B. händisch mit Polierschleifpapier) poliert.

In den vorangegangenen Beispielen wurde stets eine kugelförmige Vertiefung 2 vorgesehen. Dies ist aber keine zwingende Bedingung. Beispielsweise kann auch eine zylinderförmige Vertiefung 2 vorgesehen sein. Zudem ist auch die Verwendung eines Kugelfräsers 12 nicht zwingend, sondern es können beispielsweise auch zylinderförmige, tropfenförmige oder ellipsoidförmige Fräser eingesetzt werden. Alternativ zu einem Fräser 12 kann auch ein Schleifstift oder ein Bohrer eingesetzt werden. Darüber hinaus ist auch vorstellbar, dass die Vertiefung 2 auf andere Weise als mit einem spanabhebenden Werkzeug hergestellt wird, beispielsweise mit Hilfe eines Lasers oder mit Hilfe der Funkenerosion. Insbesondere können dabei auch prismenförmige Vertiefungen mit beliebig geformter Grundfläche hergestellt werden, beispielsweise mit elliptischer oder polygonförmiger Grundfläche. Denkbar ist auch, dass die Vertiefung 2 durch Umformung, insbesondere durch Einschlagen/Eindrücken einer Punze / eines Stempels hergestellt wird. Die Spitze der Punze / des Stempels kann beispielsweise halbkugelförmig geformt sein, kann aber beispielsweise auch prismenförmig mit beliebig geformter Grundfläche ausgestaltet sein, beispielsweise mit elliptischer oder polygonförmiger Grundfläche. Damit lassen sich dementsprechende Vertiefungen 2 in das Substrat 1 einschlagen beziehungsweise eindrücken.

Weiterhin kann auch das Abtragend des Füllstücks 3 mit Hilfe eines Lasers, durch Schleifen, durch Funkenerosion oder mit Hilfe eines Lasers erfolgen.

In den vorangegangenen Beispielen wurde stets ein kugelförmiges Füllstück 3 vorgesehen. Dies ist ebenfalls keine zwingende Bedingung für das vorgestellte Verfahren. Das Füllstück 3 kann beispielsweise auch die Form eines Rotationsellipsoids aufweisen oder aber auch tropfenförmig sowie prismenförmig (insbesondere quaderförmig) ausgebildet sein.

Die Ausführungsbeispiele zeigen eine mögliche Ausführungsvarianten einer Reparaturvorrichtung 6, wobei an dieser Stelle bemerkt sei, dass die Erfindung nicht auf die speziell dargestellte Ausführungsvarianten derselben eingeschränkt ist, sondern eine Variationsmöglichkeit aufgrund der Lehre zum technischen Handeln durch gegenständliche Erfindung im Können des auf diesem technischen Gebiet tätigen Fachmannes liegt.

Insbesondere wird auch festgehalten, dass die dargestellten Vorrichtung 6 in der Realität auch mehr oder weniger Bestandteile als dargestellt umfassen kann und in den Figuren bisweilen stark vereinfacht dargestellt sind.

Der Ordnung halber sei abschließend darauf hingewiesen, dass die dargestellte Vorrichtung 6 sowie ihre Bestandteile zum besseren Verständnis ihres Aufbaus darüber hinaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Substrat
- 2: Vertiefung
- 3: Füllstück
- 4: Rand der Vertiefung
- 5: Schnittfläche

- 6: Reparaturvorrichtung
- 7: Platte
- 8: Elektromagnet
- 9: Galgen
- 10: Arm

- 11: Schwenkstück
- 12: (Kugel)Fräser
- 13: Permanentelektrode
- 14: Halterung
- 15: Gewindestück

- 16: Gewindestück
- 17: Rändelmutter
- 18: Motor
- 19: Welle
- 20: Halterung

- 21: Gewindestück
- 22: Gewindestück
- 23: Rändelmutter

## Patentansprüche

1. Verfahren zur Reparatur eines Schadens an einem metallischen Substrat (1), umfassend die Schritte:
- Anfertigen einer Vertiefung (2) im Bereich des Schadens,
- Einlegen eines metallischen Füllstücks (3) mit wenigstens einem konvexen, gekrümmten Abschnitt in die genannte Vertiefung (2), wobei der genannte wenigstens eine gekrümmte Abschnitt der Vertiefung (2) zugewandt wird, und
- Verschweißen des Füllstücks (3) mit dem Substrat (1), wobei
- das Füllstück (3) nach dem Einlegen in die Vertiefung (2) deren Boden berührt, zum Rand (4) der Vertiefung (2) jedoch wenigstens bereichsweise ein Abstand vorgesehen wird **dadurch gekennzeichnet, dass**
- die Vertiefung (2) kugelsegmentförmig ausgeführt wird und
- ein kugelförmiges Füllstück (3) mit einem Kugelradius kleiner als der Kugelradius der Vertiefung (2) eingelegt wird und diese an einem Berührpunkt berührt.

2. Verfahren nach Anspruch 1, **dadurch gekennzeichnet, dass** die Vertiefung (2) mit einem spanabhebenden rotierenden Werkzeug, mittels Laser, mittels Funkenerosion und/oder durch Umformung angefertigt (12) wird.

3. Verfahren nacheinem der Ansprüche 1 bis 2, **dadurch gekennzeichnet, dass** die Vertiefung (2) mit einem Kugelfräser (12) oder mit einer Punze / einem Stempel angefertigt wird.

4. Verfahren nach einem der Ansprüche 1 bis 3, **dadurch gekennzeichnet, dass** ein Füllstück (3) in die Vertiefung (2) eingelegt wird, das eine zum Substrat (1) artgleiche oder idente Zusammensetzung aufweist.

5. Verfahren nach einem der Ansprüche 1 bis 3, **dadurch gekennzeichnet, dass** ein Füllstück (3) in die Vertiefung (2) eingelegt wird, das höher legiert ist als das Substrat (1).

6. Verfahren nach einem der Ansprüche 1 bis 5, **dadurch gekennzeichnet, dass** für das Verschweißen eine Permanentelektrode (13) auf das Füllstück (3) aufgesetzt und dieses hierauf mit einem Strom beaufschlagt wird.

7. Verfahren nach einem der Ansprüche 1 bis 6, **dadurch gekennzeichnet, dass** ein nach dem Verschweißen über die Oberfläche des Substrats (1) hinausragendes Material abgetragen wird.

8. Verfahren nach Anspruch 7, **dadurch gekennzeichnet, dass** der Materialabtrag mit Hilfe eines Stirnfräsers und/oder durch Abschleifen ausgeführt wird.

9. Verfahren nach einem der Ansprüche 1 bis 8, **dadurch gekennzeichnet, dass** eine mobile Vorrichtung (6) auf das Substrat (1) aufgesetzt und mit wenigstens einem Magneten (8) und/oder wenigstens einem Saugnapf auf dem Substrat (1) befestigt wird, und in Folge mit Hilfe dieser Vorrichtung (6) die Vertiefung (2) und/oder die Verschweißung und/oder der Materialabtrag hergestellt beziehungsweise durchgeführt wird, ohne die Vorrichtung (6) vom Substrat (1) zu lösen.

10. Verfahren nach einem der Ansprüche 1 bis 9, **dadurch gekennzeichnet, dass** die Vertiefung (2) mit einer Tiefe angefertigt wird, die 5 % bis 40 % eines Durchmessers entspricht, welcher dem Füllstück (3) umschrieben wird.

## Claims

1. A repairing method of a damage onto a metallic substrate (1), comprising the steps:
- producing a depression (2) in the region of the damage,
- inserting a metallic filling piece (3), having at least one convex, curved portion, into said depression (2), wherein said at least one curved portion faces the depression (2), and
- welding the filling piece (3) to the substrate (1), wherein
- the filling piece (3), after inserting into the depression (2), touches the bottom thereof, but at least in certain areas a distance is provided from the edge (4) of the depression (2), **characterized in that**
- the depression (2) is embodied in the shape of a spherical segment and
- a spherical filling piece (3) with a sphere radius smaller than the sphere radius of the depression (2) is inserted and touches the latter at a contact point.

2. The method according to claim 1, **characterized in that** the depression (2) is produced with a machining rotating tool, by means of laser, by means of spark erosion and/or by deformation (12).

3. The method according to one of claims 1 to 2, **characterized in that** the depression (2) is produced by a ball cutter (12) or by a punch / a die.

4. The method according to one of claims 1 to 3, **characterized in that** a filling piece (3) having a similar or identical composition to the substrate (1) is inserted into the depression (2).

5. The method according to one of claims 1 to 3, **characterized in that** a filling piece (3) being more highly alloyed than the substrate (1) is inserted into the depression (2).

6. The method according to one of claims 1 to 5, **characterized in that** for the welding, a permanent electrode (13) is placed onto the filling piece (3) and the latter is then energised.

7. The method according to one of claims 1 to 6, **characterized in that** a material projecting beyond the surface of the substrate (1) is removed after the welding.

8. The method according to claim 7, **characterized in that** the material removal is carried out by means of a face cutter and/or by grinding.

9. The method according to one of claims 1 to 8, **characterized in that** a mobile device (6) is placed onto the substrate (1) and is fastened on the substrate (1) by at least one magnet (8) and/or by at least one suction cup, and subsequently by means of this device (6) the depression (2) and/or the welding and/or the material removal is produced or respectively carried out, without releasing the device (6) from the substrate (1).

10. The method according to one of claims 1 to 9, **characterized in that** the depression (2) is produced with a depth which corresponds to 5 % to 40 % of a diameter, which circumscribes the filling piece (3).

## Revendications

1. Procédé de réparation d'un dommage à un substrat métallique (1), comprenant les étapes consistant à :
préparer un creux (2) dans la zone du dommage,
insérer une pièce de remplissage métallique (3), présentant au moins une section incurvée convexe, dans ledit creux (2), de sorte que ladite au moins une section incurvée est dirigée vers le creux (2), et
souder la pièce de remplissage (3) et le substrat (1), dans lequel la pièce de remplissage (3) touche le fond du creux (2) après son insertion, un intervalle étant toutefois prévu, au moins partiellement, au niveau du bord (4) du creux (2),
**caractérisé en ce que**
le creux (2) est réalisé en forme de segment de sphère, et
une pièce de remplissage en forme de cône (3) ayant un rayon sphérique plus petit que le rayon sphérique du creux (2) est insérée, qui va venir en contact au niveau d'un point de contact.

2. Procédé selon la revendication 1, **caractérisé en ce que** le creux (2) est préparé à l'aide d'un outil rotatif (12) par enlèvement de copeaux, au moyen d'un laser, par étincelage et/ou par formage.

3. Procédé selon la revendication 1 ou 2, **caractérisé en ce que** le creux (2) va être préparé à l'aide d'une fraise sphérique (12) ou à l'aide d'un poinçon / d'une empreinte.

4. Procédé selon l'une quelconque des revendications 1 à 3, **caractérisé en ce qu'**une pièce de remplissage (3) va être insérée dans le creux (2), qui présente une composition similaire ou identique au substrat (1).

5. Procédé selon l'une quelconque des revendications 1 à 3, **caractérisé en ce qu'**une pièce de remplissage (3) va être insérée dans le creux (2), qui est plus alliée que le substrat (1).

6. Procédé selon l'une quelconque des revendications 1 à 5, **caractérisé en ce que** pour le soudage, une électrode permanente (13) va être disposée sur la pièce de remplissage (3), après quoi un courant va lui être appliqué.

7. Procédé selon l'une quelconque des revendications 1 à 6, **caractérisé en ce qu'**après le soudage, un matériau dépassant de la surface supérieure du substrat (1) va être enlevé.

8. Procédé selon la revendication 7, **caractérisé en ce que** l'enlèvement de matériau va être réalisé à l'aide d'une fraise et/ou par meulage.

9. Procédé selon l'une quelconque des revendications 1 à 8, **caractérisé en ce qu'**un dispositif mobile (6) est disposé sur le substrat (1), et est fixé sur le substrat (1) à l'aide d'au moins un aimant (8) et/ou d'au moins une ventouse, et ensuite, à l'aide de ce dispositif (6), l'évidement (2) et/ou le soudage et/ou l'enlèvement de matériau est établi ou plutôt réalisé sans que le dispositif (6) ne soit enlevé du substrat (1).

10. Procédé selon l'une quelconque des revendications 1 à 9, **caractérisé en ce que** le creux (2) va être préparé avec une profondeur qui correspond à 5 % à 40 % d'un diamètre qui est décrit par la pièce de remplissage (3).
